# EUROPEAN PATENT APPLICATION

(11) **EP 1 909 079 A1**
(43) Date of publication of application: **09.04.2008**
(21) Application number: 06767887.0
(22) Date of filing: 05.07.2006
(51) Int. Cl.: G01H 11/08, G01H 13/00, H04R 17/10

(54) **OSCILLATORY WAVE DETECTING APPARATUS**

(30) Priority: 06.07.2005 JP 2005197798
(71) Applicant: Tokyo Electron Limited (TEL), Tokyo 107-8481 (JP)
(72) Inventor: IKEUCHI, Naoki c/o TOKYO ELECTRON AT LIMITED,, 6600891 (JP)
(74) Representative: Goddar, Heinz J.
(86) International application number: PCT/JP2006/313381
(87) International publication number: WO 2007/004665

(57) **Abstract**

A sensor body 1 having a plurality of resonator beams 5 each resonating with a different specific frequency and a plate-like diaphragm 2 connected to the resonator beams and vibrating in response to sound waves is supported by a supporter 11. A cap 12 for acoustically separating one of the surfaces of the diaphragm 2 from the other surface is placed on the sensor body 1 to make the pressure difference between the sound pressure applied on one of the surfaces of the diaphragm 2 and the sound pressure applied on the other surface large in order to improve sensitivity.

## Description

### TECHNICAL FIELD

This invention relates to vibration-wave detectors. More specifically, this invention relates to a vibration-wave detector for electrically detecting the intensity of a vibration wave in each frequency band using a plurality of resonators with different resonant frequencies from each other.

### BACKGROUND ART

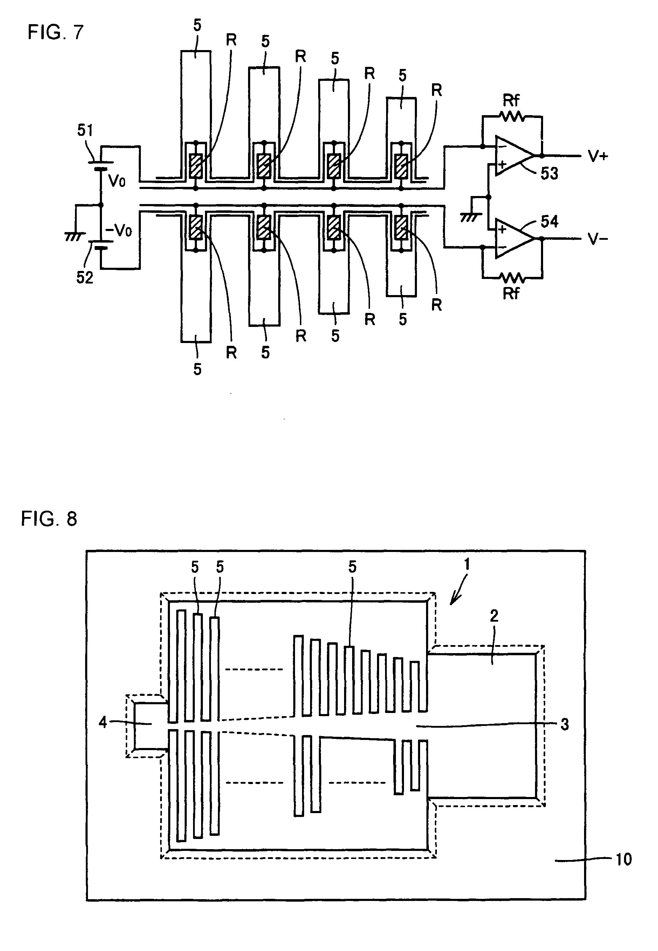

FIG. 8 is a plan view of a conventional vibration-wave detector. This vibration-wave detector is disclosed in Japanese Patent No. 3348687. In FIG. 8, a sensor body 1 is formed on a semiconductor silicon substrate 10 and includes a diaphragm 2, a transversal beam 3, a terminator 4 and a plurality of resonator beams 5. The diaphragm 2 is a thin plate designed so as to vibrate in response to input sound waves. The transversal beam 3 couples the diaphragm 2 and terminator 4 and is wide on the diaphragm 2 side and gradually tapers toward the terminator 4 to be narrowest at an end of the terminator 4.

The plurality of resonator beams 5 have adjusted lengths to resonate with different specific frequencies and are cantilevered from the transversal beam 3 to extend to both sides of the transversal beam 3. The vibration-wave detector shown in FIG. 8 takes on a fish bone structure having pairs of resonator beams 5, 5, and the resonant frequencies of which are the same for the beams in a pair but different for every pair. The terminator 4 absorbs vibrations of input sound waves, which travel from the diaphragm 2 through the transversal beam 3, to prevent the vibrations from returning to the diaphragm 2. There is a space under the diaphragm 2, transversal beam 3, terminator 4 and resonator beams 5 and an opening around the resonator beams 5.

The vertical vibrations in the diaphragm 2 generated by an input sound wave are transferred to the transversal beam 3 along the horizontal direction to cause the corresponding resonators in the plurality of resonator beams 5 to vibrate vertically. The resonator beams 5 can have desired values of the resonant frequency by changing their lengths or thicknesses. A piezoresistance is disposed on each resonator beam 5 and near the transversal beam 3 but not illustrated in the drawing. The change in the resistance value of the piezoresistance can be taken out, for example, from the output of a Wheatstone bridge.

In the vibration-wave detector shown in FIG. 8, a space is provided under the diaphragm 2, transversal beam 3, terminator 4 and resonator beams 5. An opening is provided around the plurality of resonator beams 5, from one side to the other side of the resonator beams, which means the front surface and the rear surface of the diaphragm 2 are not spatially separated. This causes input sound waves not only to be transferred to one of the surfaces of the diaphragm 2 but also to bend around to the other surface. As a result, it is difficult to maintain the pressure difference between the sound pressure applied on one of the surfaces of the diaphragm 2 and the sound pressure applied on the other surface, whereby deteriorating the input efficiency and sensitivity. Especially low-frequency sounds having a long wavelength and thus being easy to be diffracted cause more desensitization of the vibration-wave detector.

### DISCLOSURE OF THE INVENTION

It is an object of this invention to provide a vibration-wave detector having improved input efficiency and sensitivity.

This invention includes a vibration plate that vibrates in response to sound waves, a plurality of resonators coupled to the vibration plate, each of the resonators resonating with a different specific frequency, and an acoustic shielding section for acoustically separating one of the surfaces of the vibration plate from the other surface.

The acoustic shielding section allows the sound wave to be input to one of the surfaces of the vibration plate but prevents it from diffracting to the other surface.

Preferably, the acoustic shielding section includes a shielding wall that isolates at least a space adjacent to the other surface of the vibration plate from a space adjacent to the one of the surfaces.

In an embodiment, the acoustic shielding section includes a supporting member that forms an enclosed vacant room adjacent to the other surface of the vibration plate and resonators, and a cap that covers one of the surfaces of the plurality of resonators. The supporting member and cap can acoustically separate the one of the surfaces of the vibration plate from the other surface.

The cap includes an acoustic shielding air gap section arranged so as to face the boundary between the vibration plate and the plurality of resonators and having a predetermined dimension to prevent sound waves from passing therethrough. Thanks to the acoustic shielding air gap section, the vibrations of the vibration plate and plurality of resonators are not blocked.

In addition, the cap includes an opening through which the sound wave is input to the vibration plate. The sound wave can be efficiently input through the opening. The cap includes a sealing section that covers the plurality of resonators and has a cavity for resonance formed therein. Thanks to the cavity for resonance, the vibration of the plurality of resonators is not blocked.

In another embodiment, the acoustic shielding section forms a vacant room that is isolated from one of the surfaces of the vibration plate on the other surface side, and includes a wall having an acoustic shielding air gap section facing the boundary between the vibration plate and the plurality of resonators and having a predetermined dimension to prevent sound waves from passing therethrough.

In another aspect of the present invention, the vibration-wave detector includes a vibration plate vibrating in response to sound waves, a plurality of resonators connected to the vibration plate, each of the resonators resonating with a different specific frequency, and an acoustic shielding section covering the vibration plate and the plurality of resonators and having a thin film facing one of surfaces of the vibration plate with an air gap of a predetermined dimension interposed between the thin film and the one of the surface of the vibration plate.

In the vibration-wave detector, according to the present invention, including the vibration plate and the plurality of resonators connected to the vibration plate and each resonating with a different specific frequency, the acoustic shielding section acoustically separates one of the surfaces of the vibration plate from the other surface to prevent the sound wave, which is input to the one of the surfaces of the vibration plate, from diffracting to the other surface. As a result, the pressure difference between sound pressure applied on the one of the surfaces of the vibration plate and sound pressure applied on the other surface becomes large, thereby improving the input efficiency and sensitivity of the vibration-wave detector.

### BRIEF DESCRIPTION OF THE DRAWINGS

FIG. 1 is an external perspective view of a vibration-wave detector with a cap placed thereon according to an embodiment of the invention.
FIG. 2 is a cross-sectional view of the vibration-wave detector in FIG. 1 housed in a ceramic package.
FIG. 3 is a cross-sectional view of a vibration-wave detector according to another embodiment of the invention.
FIG. 4A is a plan view of a vibration-wave detector according to yet another embodiment of the invention.
FIG. 4B is a cross-sectional view taken along line IVB-IVB in FIG.4A.
FIG. 4C is a plan view of the sensor body shown in FIG. 4A.
FIG. 5A is a plan view of a vibration-wave detector according to yet another embodiment of the invention.
FIG. 5B is a cross-sectional view taken along line VB-VB in FIG. 5A.
FIG. 5C is a plan view of the sensor body shown in FIG. 5A.
FIG. 6A is a plan view of a vibration-wave detector according to yet another embodiment of the invention.
FIG. 6B is a cross-sectional view taken along line VIB-VIB in FIG. 6A.
FIG. 6C is a plan view of the sensor body shown in FIG. 6A.
FIG. 7 is a circuit diagram of a circuit for taking out signals of the frequency components detected by the vibration-wave detector of the invention.
FIG. 8 is a plan view of a conventional vibration-wave detector.

### BEST MODE FOR CARRYING OUT THE INVENTION

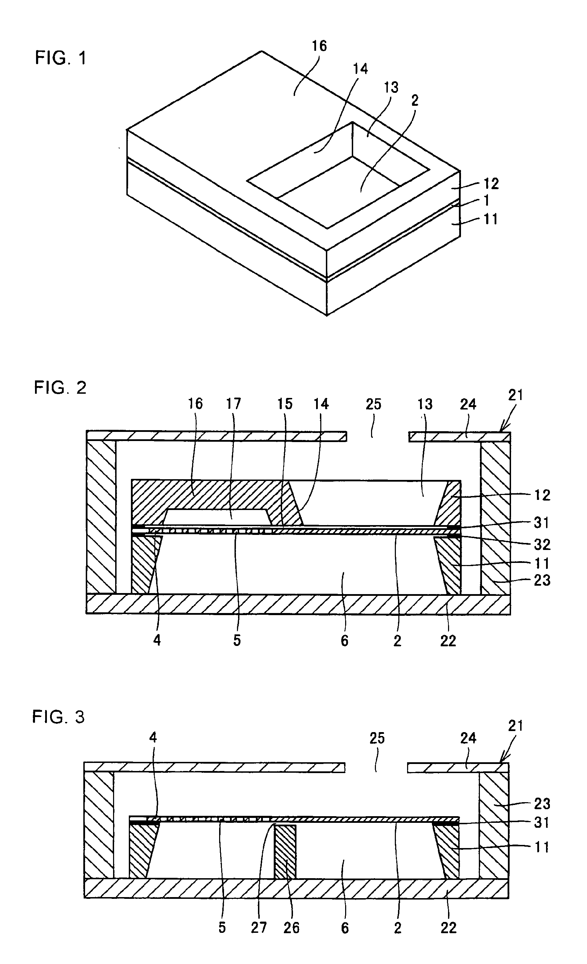

FIG. 1 is an external perspective view of a vibration-wave detector according to one embodiment of this invention with a cap 12 thereon. FIG. 2 is a cross-sectional view of the vibration-wave detector in FIG. 1 housed in a ceramic package 21.

In FIGS. 1 and 2, a sensor body 1 has almost the same structure as that shown in FIG. 8 and includes a diaphragm 2, a transversal beam (not shown), a terminator 4 and resonator beams 5 acting as a plurality of resonators. The sensor body 1 is placed on a supporter 11 that is a supporting member holding the periphery of the sensor body 1. A cap 12 is put on the sensor body 1. The sensor body 1, supporter 11 and cap 12 are housed within the ceramic package 21 as shown in FIG. 2.

The supporter 11 is made of, for example, silicon or glass, into a rectangular shape so as to surround the periphery of the lower surface of the sensor body 1, and has a backroom 6 inside thereof as a vacant room. The backroom 6 is made to secure a space for the purpose of not damping the vertical vibration of the diaphragm 2 and the plurality of resonator beams 5.

The cap 12 comprises shielding walls with the supporter 11 and the bottom 22 of the ceramic package 21, all functioning as an acoustic shielding section for acoustically separating one of surfaces (upper surface) from the other surface (lower surface) of the diaphragm 2 of the sensor body 1. This acoustical separation of one of the surfaces from the other surface of the diaphragm 2 allows input waves to be transferred to only one of the surfaces of the diaphragm 2 and prevents the input waves from diffracting to the other surface, thereby making the pressure difference between the sound pressure applied on one of the surfaces of the diaphragm 2 and the sound pressure applied on the other surface large. Consequently, the input efficiency and sensitivity of the vibration-wave detector can be improved.

The cap 12 of the vibration-wave detector is made of, for example, silicon or glass into a rectangular shape and has an opening 13 and sealing section 16. The opening 13 has walls 14 tapering so that the opening becomes wider on its top and narrower on the sensor body 1 side for the purpose of making it easy for the diaphragm 2 of the sensor body 1 to collect sound waves.

The walls 14 of the opening 13 enclose the periphery of the diaphragm 2. Among the walls 14, under the lower surface a wall 14 positioned in approximately the middle of the cap 12, there is an air gap 15 serving as an acoustic shielding air gap section. The air gap 15 which faces the boundary of the diaphragm 2 and resonator beams 5 is made to be too narrow to let the sound waves in, for example, at least 10 µm but less than 20 µm. The air gap 15 is made because if the lower surface of the wall in the middle of the cap makes close and direct contact with the diaphragm 2 or resonator beams 5, the vibrations of the diaphragm 2 and resonator beams 5 are blocked by the lower surface of the wall.

The sealing section 16 is formed to seal the open space around the plurality of resonator beams 5. As shown in FIG. 2, the sealing section 16 has a cavity for resonance 17 that is made to face the resonator beams 5 by hollowing out the sealing section so as to have a height of 50 µm to 100 µm, for example. The cavity for resonance 17 is made to secure a space so that the plurality of resonating resonator beams 5 do not touch the cap 12.

In addition, the cavity for resonance 17 prevents sound waves from being directly input to the plurality of resonator beams 5, thereby preventing deterioration of the sensitivity of the resonator beams 5. The peripheries of the supporter 11 and cap 12 are bonded to the lower surface and upper surface of the silicon substrate, respectively, with adhesives 31, 32.

The ceramic package 21 includes the bottom 22, side walls 23 and the top 24 having an opening 25. The opening 25 is so formed that sound waves can be input through the opening 13 of the cap 12 to the diaphragm 2. Although FIG. 2 shows the opening 25 of the ceramic package 21 being above the opening 13 of the cap 12, the position of the opening 25 is not limited to this. The opening 25 can be formed in the top 24 at a position above the cavity for resonance 17 of the cap 12.

According to the above-described embodiment, a sound wave is input from the opening 25 of the ceramic package 21 through the opening 13 of the cap 12 to only one surface of the diaphragm 2. The input sound wave cannot bend around to the other surface of the diaphragm 2 because the other surface is acoustically separated from the one of the surfaces by enclosing it with the bottom 22 of the ceramic package 21, supporter 11 and cap 12. Accordingly, the pressure difference can be made large to improve the sensitivity.

The cap 12 over the sensor body 1 does not damp the vibration of the diaphragm 2 because of the opening 13 formed above the diaphragm 2. The sealing section 16 also does not damp the vibration of the plurality of resonator beams 5 because of the cavity for resonance 17 formed inside the sealing section 16.

FIG. 3 is a cross-sectional view of the vibration-wave detector according to another embodiment of this invention. Although the cap 12 that is a part of the acoustic shielding section is put on the sensor body 1 in the embodiment shown in FIG. 2, this embodiment includes a wall 26 placed to divide the backroom 6 under the sensor body 1 without the cap 12. Specifically, on the bottom 22 of the ceramic package 21, there are formed the supporter 11 and the wall 26 for dividing the backroom 6 into a space under the lower surface, which is the other surface, of the diaphragm 2 and a space under the lower surface of the resonator beams 5. An air gap 27, which is similar to the air gap 15 in FIG. 2, is provided between the upper surface of the wall 26 and the other surface of the diaphragm 2.

A sound wave input from the opening 25 of the ceramic package 21 applies a sound pressure on one of the surfaces of the diaphragm 2, but not on the other surface of the diaphragm 2. This is because the space under the other surface is isolated by the supporter 11, wall 26 and bottom 22 from the one of the surfaces, and therefore the input sound wave cannot bend around to the space under the other surface. Consequently, it is possible to make the pressure difference large.

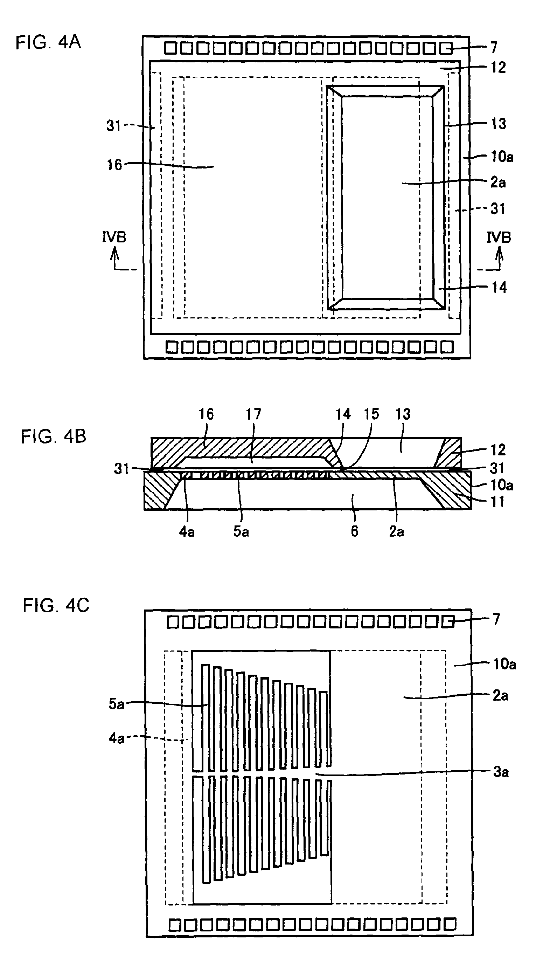

FIG. 4A is a plan view of a vibration-wave detector of yet another embodiment of this invention. FIG. 4B is a cross-sectional view taken along line IVB-IVB in FIG. 4A. FIG. 4C is a plan view of the sensor body in FIG. 4A.

In FIGS. 4A to 4C, a semiconductor substrate 10a is etched to form a diaphragm 2a, a transversal beam 3a, a plurality of resonator beams 5a and terminator 4a in an integral manner. At the lower part of the semiconductor substrate 10a, a supporter 11 is formed to surround a backroom 6. In addition, a plurality of electrode pads 7 are formed on the semiconductor substrate 10a. The electrode pads 7A are electrically connected to piezoresistance elements (not shown), respectively, each of which is provided for a corresponding one of the plurality of resonator beams.

The periphery of the plurality of resonator beams 5a shown in FIG. 4C is open from one of the surfaces to the other surface. The backroom 6 adjacent to the other surface of the diaphragm 2a is not isolated from the one of the surfaces of the diaphragm 2a, which causes the sound wave transmitted to the diaphragm 2a to bend around to the backroom 6 side and thereby apply a sound pressure on the other surface of the diaphragm 2a.

Then, a cap 12 shown in FIGS. 4A and 4B is placed on the semiconductor substrate 10a. The cap 12 is the same as the cap 12 shown in FIGS. 1 and 2. The cap 12 includes a sealing section 16, an opening 13 having tapered walls 14, an air gap 15 and a cavity for resonance 17. The cap 12 is fixed on the semiconductor substrate 10a with an adhesive 31. The semiconductor substrate 10a with the cap 12 thereon is housed in the ceramic package 21 shown in FIG. 1, or the open end of the backroom 6 is sealed by a bottom plate (not shown).

Since the opening around the plurality of resonator beams 5 of the semiconductor substrate 10a is closed by the cap 12, while the open end of the backroom 6 is sealed according to this embodiment, the sound wave input through the opening 13 of the cap 12 to one of the surfaces of the diaphragm 2a does not bend around to the backroom 6 side. As a result, it is possible to make the pressure difference large, thereby obtaining excellent sensitivity of the vibration-wave detector.

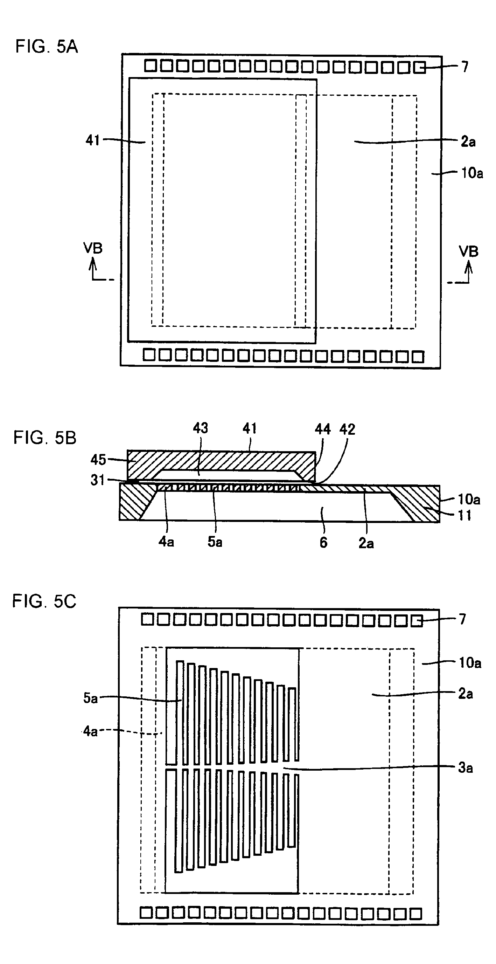

FIG. 5A is a plan view of a vibration-wave detector of yet another embodiment of this invention. FIG. 5B is a cross-sectional view taken along line VB-VB in FIG. 5A. FIG. 5C is a plan view of the sensor body 10a.

The sensor body 10a shown in FIGS. 5A to 5C is the same as the one shown in FIGS. 4A to 4C, however the cap 41 is different from the cap 12 shown in FIGS. 4A and 4B. Specifically, the cap 41 in this embodiment does not have the opening 13, which is formed in the cap 12 in FIG. 4A, but has only a sealing section 45 for closing the opening around the plurality of resonator beams 5.

In the sealing section 45 of the cap 41, a cavity for resonance 43 is formed parallel to the plurality of resonator beams 5a. The cap 41 has a wall 44 positioned above the proximity of the boundary between the diaphragm 2a and resonator beams 5a, and an air gap 42 is provided between the lower surface of the wall 44 and the diaphragm 2a. The semiconductor substrate 10a with the cap 41 thereon is housed in the ceramic package 21 shown in FIG. 1, or the open end of the backroom 6 is sealed by a bottom plate (not shown). The cap 41 is fixed on the semiconductor substrate 10a by applying an adhesive 31 between the lower surface of the wall on the other side of the wall 44 and the semiconductor substrate 10a.

In this embodiment, the sound wave is directly input to one of the surfaces of the diaphragm 2a due to the absence of the opening in the cap 41. By housing the semiconductor substrate 10a in the ceramic package 21 in FIG. 1 or sealing the open end of the backroom 6 with a bottom plate (not shown), the sound wave input to the one of the surfaces of the diaphragm 2a cannot bend around to the backroom 6 side. Consequently, it is possible to make the pressure difference large, thereby obtaining excellent sensitivity of the vibration-wave detector.

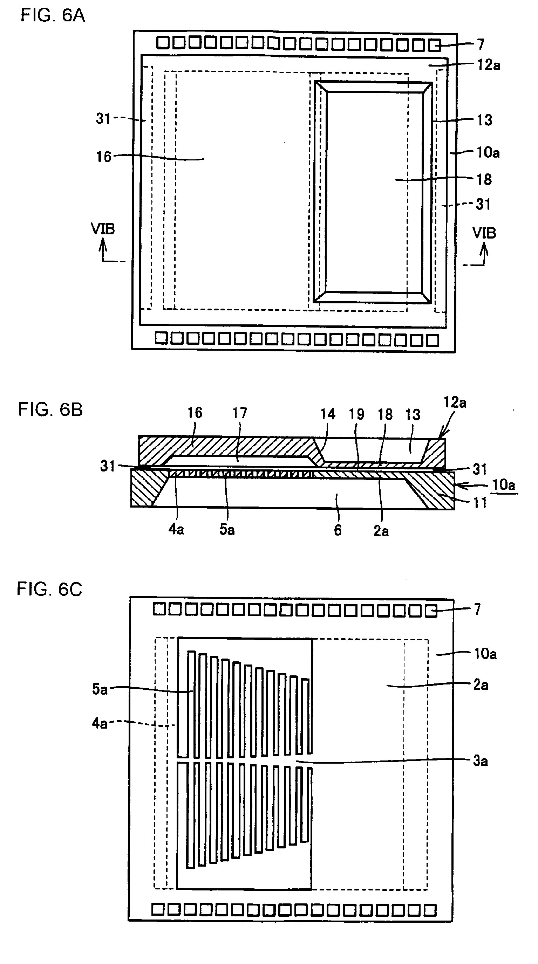

FIG. 6A is a plan view of a vibration-wave detector of yet another embodiment of this invention. FIG. 6B is a cross-sectional view taken along line VIB-VIB in FIG. 6A. FIG. 6C is a plan view of the sensor body.

This embodiment shown in FIGS. 6A to 6C has a thin film 18 formed at the open end, near the diaphragm 2a, of the opening 13 of the cap 12a. A coupling air gap 19 is formed to provide an interval of, for example, 10 µm or less between the thin film 18 and diaphragm 2a. Other configurations are the same as those in FIGS. 4A to 4C.

In this embodiment, the sound wave input through the opening 13 of the cap 12a causes the thin film 18 to vibrate, and in turn the vibration is transferred through the coupling air gap 19 to one of surfaces of the diaphragm 2a. Since the opening around the plurality of resonator beams 5a is sealed by the sealing section 16 of the cap 12a, the sound wave cannot be transferred to the other surface of the diaphragm 2a. Therefore, it is possible to make the pressure difference large and thus obtain excellent sensitivity.

FIG. 7 is a circuit diagram of a circuit that takes out signals of the frequency components detected by the vibration-wave detector of this invention. FIG. 7 illustrates only four resonator beams 5 cantilevered from each side of the transversal beam for the sake of simplicity.

A piezoresistance R made of polysilicon is formed at a position where distortion occurs, on each resonator beam 5 and near the transversal beam. These piezoresistances R are connected in parallel to provide two sets of parallel circuits. The parallel circuits have ends connected to a direct voltage source 51 of a voltage V0 and a direct voltage source 52 of a voltage -V0, respectively, and the other ends connected to the minus input terminals of operating amplifiers 53 and 54, respectively. The plus input terminals of the operating amplifiers 53, 54 are grounded. A feedback resistance Rf is connected between the minus input terminal and output terminal of each of the operating amplifiers 53, 54.

In the circuit shown in FIG. 7, the direct voltage source 51 applies a bias voltage V0 to one side of the resonator beams 5, while the direct voltage source 52 applies a bias voltage -V0 to the other side of the resonator beams 5. When a specific resonator beam 5 resonates, the resistance value of the piezoresistance R corresponding to the resonator beam 5 changes due to the distortion created by the resonance. The sum of the changes is added. Then, the operating amplifiers 53, 54 add the output signals from both sides of the parallel circuits to double the outputs.

Although the present invention is applied to the vibration-wave detector having resonator beams 5a cantilevered from both sides of the transversal beam 3a and along the direction in which the transversal beam 3a extends in the above-described embodiments, the invention can be applied to the vibration-wave detector having resonator beams 5a cantilevered from only one side of the transversal beam 3a.

The foregoing has described the embodiments of the present invention by referring to the drawings. However the invention should not be limited to the illustrated embodiments. It should be appreciated that various modifications and changes can be made to the illustrated embodiments within the scope of the appended claims and their equivalents.

### INDUSTRIAL APPLICABILITY

The vibration-wave detector according to the present invention can be utilized in frequency detectors that detect the frequency of sound waves.

## Claims

1. A vibration-wave detector comprising:
a vibration plate vibrating in response to sound waves;
a plurality of resonators connected to said vibration plate, each of said resonators resonating with a different specific frequency; and
an acoustic shielding section for acoustically separating one of surfaces of said vibration plate from the other surface.

2. The vibration-wave detector according to claim 1, wherein
said acoustic shielding section includes a shielding wall that isolates at least a space adjacent to said other surface of said vibration plate from a space adjacent to said one of the surfaces.

3. The vibration-wave detector according to claim 1, wherein
said acoustic shielding section comprises:
a supporting member forming an enclosed vacant room adjacent to said other surface of said vibration plate and said resonators: and
a cap covering one of surfaces of said plurality of resonators.

4. The vibration-wave detector according to claim 3, wherein
said cap includes an acoustic shielding air gap section for preventing said sound wave from passing therethrough, said acoustic shielding air gap section facing the boundary between said vibration plate and said plurality of resonators and having a predetermined dimension.

5. The vibration-wave detector according to claim 3, wherein
said cap includes an opening through which said sound wave is input to said vibration plate.

6. The vibration-wave detector according to claim 3, wherein
said cap includes a sealing section covering said plurality of resonators and having a cavity for resonance formed therein.

7. The vibration-wave detector according to claim 1, wherein
said acoustic shielding section forms a vacant room isolated from one of surfaces of said vibration plate on the other surface side, and
said acoustic shielding section includes a wall having an acoustic shielding air gap section for preventing said sound wave from passing therethrough, said acoustic shielding air gap section facing the boundary between said vibration plate and said plurality of resonators and having a predetermined dimension.

8. A vibration-wave detector comprising:
a vibration plate vibrating in response to sound waves;
a plurality of resonators connected to said vibration plate, each of said resonators resonating with a different specific frequency; and an acoustic shielding section covering said vibration plate and said plurality of resonators and having a thin film facing one of surfaces of said vibration plate with an air gap of a predetermined dimension interposed between said
thin film and said one of the surfaces of said vibration plate.

## Amended claims

### Amended claims under Art. 19.1 PCT

1. (Amended) A vibration-wave detector comprising:
a vibration plate vibrating in response to sound waves from an external sound source of interest;
a plurality of resonators connected to said vibration plate, each of said resonators resonating with a different specific frequency; and
an acoustic shielding section for acoustically separating one of surfaces of said vibration plate from the other surface and insulating said other surface of said vibration plate from said sound source.

2. The vibration-wave detector according to claim 1, wherein
said acoustic shielding section includes a shielding wall that isolates at least a space adjacent to said other surface of said vibration plate from a space adjacent to said one of the surfaces.

3. The vibration-wave detector according to claim 1, wherein
said acoustic shielding section comprises:
a supporting member forming an enclosed vacant room adjacent to said other surface of said vibration plate and said resonators; and
a cap covering one of surfaces of said plurality of resonators.

4. The vibration-wave detector according to claim 3, wherein
said cap includes an acoustic shielding air gap section for preventing said sound wave from passing therethrough, said acoustic shielding air gap section facing the boundary between said vibration plate and said plurality of resonators and having a predetermined dimension.

5. The vibration-wave detector according to claim 3, wherein
said cap includes an opening through which said sound wave is input to said vibration plate.

6. The vibration-wave detector according to claim 3, wherein
said cap includes a sealing section covering said plurality of resonators and having a cavity for resonance formed therein.

7. The vibration-wave detector according to claim 1, wherein
said acoustic shielding section forms a vacant room isolated from one of surfaces of said vibration plate on the other surface side, and
said acoustic shielding section includes a wall having an acoustic shielding air gap section for preventing said sound wave from passing therethrough, said acoustic shielding air gap section facing the boundary between said vibration plate and said plurality of resonators and having a predetermined dimension.

8. A vibration-wave detector comprising:
a vibration plate vibrating in response to sound waves;
a plurality of resonators connected to said vibration plate, each of said resonators resonating with a different specific frequency; and
an acoustic shielding section covering said vibration plate and said plurality of resonators and having a thin film facing one of surfaces of said vibration plate with an air gap of a predetermined dimension interposed between said thin film and said one of the surfaces of said vibration plate.

Statement under Art. 19.1 PCT
For the purpose of clearly differentiating the present invention from reference 1, JP2003-75284A (DAIKIN INDUSTRIES, LTD) cited by the international search report, claim 1 of the present invention is amended to add a limitation of isolating the other surface of the vibration plate from an external sound source of interest.

Cited reference 1 is pertinent to a method for inspecting leakage of products, such as a compressor. The compressor is set in a sound insulation box provided with sound source locating sensors capable of specifying the direction of a sound source. When fluid is supplied into the compressor and leaking therefrom, the position where the sound of leaked fluid is generated is specified using a plurality of sound source locating sensors and the leak position of an object under inspection is detected. Cited reference 1 just describes the above structure but not describe the sensor having a fish bone structure in the present invention.
